# EUROPEAN PATENT APPLICATION

(11) **EP 3 808 464 A1**
(43) Date of publication of application: **21.04.2021**
(21) Application number: 19818921.9
(22) Date of filing: 10.06.2019
(51) Int. Cl.: B09B 3/00, F27B 17/00

(54) **PYROLYSIS APPARATUS**

(30) Priority: 13.06.2018 JP 2018112988
(71) Applicant: Kabushiki Kaisha Kakuno Seisakusho, Buzen-shi, Fukuoka 828-0035 (JP); Kabushiki Kaisha Noble, Miyazaki-shi, Miyazaki 880-0824 (JP)
(72) Inventor: KAKUNO, Toshimitsu, Fukuoka 828-0043 (JP)
(74) Representative: Winter, Brandl - Partnerschaft mbB
(86) International application number: PCT/JP2019/022922
(87) International publication number: WO 2019/240077

(57) **Abstract**

To provide a pyrolysis apparatus capable of pyrolyzing an object to be treated without releasing exhaust gas to the atmosphere. This pyrolysis apparatus comprises: a treatment furnace 2 having a pyrolysis section 2B where an object to be treated is subjected to pyrolysis on a grate 60; a purification water tank 7 retaining water 70 and having a gas pool 71 formed in an upper part thereof; a primary purification tank 8 connected to the upper part of the purification water tank 7, in which water is jetted toward exhaust gas flowing in from an upper part of the treatment furnace 2 through a gas flue 11; a piping through which gas is taken up from the gas pool 71 of the purification water tank 7 and returned to the primary purification tank 8; a secondary purification tank 9 connected to the upper part of the purification water tank 7, in which water is jetted toward the gas taken up from the gas pool 71 of the purification water tank 7; and a return piping 12 through which the gas having passed the secondary purification tank 9 is fed into the treatment furnace 2.

## Description

### Technical Field

The present invention relates to a pyrolysis apparatus for pyrolyzing an object to be treated such as organic waste including garbage, waste wood, waste plastics, and animal excrement.

### Background Art

For example, Patent Literature 1 describes an apparatus by which a mixed dehydrated cake of excess sludge of activated sludge and used powder activated carbon is heat-treated to pyrolyze the excess sludge and regenerate the powder activated carbon which is to be reused, the apparatus including drying furnace floor stages, pyrolyzing furnace floor stages provided with a group of air blowing holes, and activation furnace floor stages provided with a group of air and steam blowing holes, wherein a rotation shaft having agitation arms, each arranged on the respective furnace floor stages is inserted vertically in the apparatus. A part of the exhaust gas is recirculated and used via a recirculation passage; however, other exhaust gas is combusted in a post-combustion chamber and released into the atmosphere from an exhaust pipe by an induced exhauster after going through a scrubber.

### Citation List

### Patent Literature

Patent Literature 1: JPS54-161744 A

### Summary of Invention

### Technical Problem

As described in Patent Literature 1, a conventional pyrolysis apparatus is configured such that exhaust gas is eventually released into the atmosphere from an exhaust pipe. For this reason, it is necessary to be careful of the type of an object to be treated, or to install an expensive de-smoking and deodorizing device so as not to pollute the air.

In view of the above, a purpose of the present invention is to provide a pyrolysis apparatus capable of pyrolyzing an object to be treated without releasing exhaust gas into the atmosphere.

### Solution to Problem

The pyrolysis apparatus of the present invention includes: a treatment furnace having a pyrolysis section in which an object to be treated is subjected to pyrolysis on a grate; a purification water tank which retains water and has a gas pool formed in an upper part thereof; a primary purification tank which is connected to the upper part of the purification water tank, in which water is jetted toward exhaust gas flowing through a gas flue from an upper part of the treatment furnace; a piping through which gas is sucked up from the gas pool of the purification water tank and is returned to the primary purification tank; a secondary purification tank which is connected to the upper part of the purification water tank, in which water is jetted toward the gas sucked up from the gas pool of the purification water tank; and a return piping through which the gas that has passed through the secondary purification tank is fed into the treatment furnace.

According to the pyrolysis apparatus of the present invention, the exhaust gas generated in the treatment furnace flows into the primary purification tank from the upper part of the treatment furnace through the gas flue, and is cooled rapidly by the water jetted in the primary purification tank and decomposed to be purified. The water brought into contact with the exhaust gas falls into the purification water tank. Then, the gas in the gas pool located in the upper part of the purification water tank is sucked up and returned to the primary purification tank to undergo circulation treatment, and is also sucked up and sent to the secondary purification tank, further cooled rapidly by the water jetted in the secondary purification tank and decomposed to be purified. The water then falls into the purification water tank. Further, the purified gas that has passed through the secondary purification tank is fed into the treatment furnace through the return piping. In other words, according to the pyrolysis apparatus of the present invention, the exhaust gas generated in the treatment furnace flows from the upper part of the treatment furnace through the gas flue into the primary purification tank, the purification water tank, and the secondary purification tank for purification, and the purified gas is returned into the treatment furnace through the return piping and is reused in the pyrolysis as a low-oxygen concentration gas. On the other hand, carbon in the exhaust gas falls into the purification water tank together with the water and is solidified and becomes tar therein.

It is desirable that the pyrolysis apparatus of the present invention includes a gas discharge pipe which is connected to the return piping and through which the gas fed from the return piping is discharged substantially uniformly into a space below the grate in the treatment furnace. Due to the above configuration, the low-oxygen concentration gas is uniformly distributed in the treatment furnace, so that the oxygen amount in the treatment furnace becomes uniform and the object to be treated is uniformly pyrolyzed in the treatment furnace.

It is desirable that the pyrolysis apparatus of the present invention includes a circulation purification tank which is provided between the secondary purification tank and the return piping and which is connected to the upper part of the purification water tank, in which water is jetted toward the gas that has passed through the secondary purification tank. Due to the above configuration, the gas that has passed through the secondary purification tank is sent to the circulation purification tank, further cooled rapidly by the water jetted in the circulation purification tank and decomposed to be purified, and then fed into the treatment furnace through the return piping.

Further, it is desirable that the treatment furnace has a drying section above the pyrolysis section, in which the object to be treated is dried by the heat rising from the pyrolysis section. Due to the above configuration, the object to be treated is dried in the drying section by the heat rising from the pyrolysis section and then subjected to pyrolysis in the pyrolysis section.

Further, it is desirable that the pyrolysis apparatus of the present invention includes a charging device by which the object to be treated is automatically charged from above the treatment furnace, the charging device having: a cylindrical section which is connected to the upper part of the treatment furnace and through which the object to be treated supplied from above is charged into the treatment furnace; and a pair of upper and lower dumpers for opening and closing the cylindrical section, which are provided at a predetermined interval vertically at the cylindrical section and open and close alternately at a fixed time interval. Due to the above configuration, with the lower dumper of the cylindrical section being closed, the object to be treated is supplied into the cylindrical section from above, and then the upper dumper of the cylindrical section is closed and the lower dumper is opened, whereby the object to be treated inside the cylindrical section is automatically charged into the treatment furnace. Consequently, it is possible to treat the object to be treated continuously, and at the same time, it is possible to prevent the exhaust gas from flowing up through the charging device when the object to be treated is charged from above the treatment furnace.

### Advantageous Effects of Invention

(1) With the configuration comprising: a treatment furnace having a pyrolysis section in which an object to be treated is subjected to pyrolysis on a grate; a purification water tank which retains water and has a gas pool formed in an upper part thereof; a primary purification tank which is connected to the upper part of the purification water tank, in which water is jetted toward exhaust gas flowing through a gas flue from an upper part of the treatment furnace; a piping through which gas is sucked up from the gas pool of the purification water tank and is returned to the primary purification tank; a secondary purification tank which is connected to the upper part of the purification water tank, in which water is jetted toward the gas sucked up from the gas pool of the purification water tank; and a return piping through which the gas that has passed through the secondary purification tank is fed into the treatment furnace, the exhaust gas generated in the treatment furnace flows from the upper part of the treatment furnace through the gas flue into the primary purification tank, the purification water tank, and the secondary purification tank for purification. The purified gas is then returned into the treatment furnace through the return piping, as a result of which no exhaust gas is released into the atmosphere. Further, the carbon in the exhaust gas falls into the purification water tank together with water and is solidified and becomes tar therein, as a result of which it is possible to collect and use the tar inside the purified water tank.
(2) With the configuration comprising a gas discharge pipe which is connected to the return piping and through which the gas fed from the return piping is discharged substantially uniformly into a space below the grate in the treatment furnace, low-oxygen concentration gas is uniformly distributed in the treatment furnace, so that the oxygen amount in the treatment furnace becomes uniform and the object to be treated is uniformly pyrolyzed in the treatment furnace, as a result of which it is possible to perform pyrolytic treatment of the object to be treated in the treatment furnace evenly and efficiently.
(3) With the configuration comprising a circulation purification tank which is provided between the secondary purification tank and the return piping and which is connected to the upper part of the purification water tank, in which water is jetted toward the gas that has passed through the secondary purification tank, the gas that has passed through the secondary purification tank is further purified in the circulation purification tank, and then fed into the treatment furnace through the return piping to be reused.
(4) With the configuration of the treatment furnace having a drying section above the pyrolysis section, in which the object to be treated is dried by the heat rising from the pyrolysis section, the object to be treated is dried in the drying section by the heat rising from the pyrolysis section and then subjected to pyrolysis in the pyrolysis section. It is therefore possible to effectively use the heat generated from the pyrolysis section.
(5) With the configuration comprising a charging device by which the object to be treated is automatically charged from above the treatment furnace, in which the charging device includes: a cylindrical section which is connected to the upper part of the treatment furnace and through which the object to be treated supplied from above is charged into the treatment furnace; and a pair of upper and lower dumpers for opening and closing the cylindrical section, which are provided at a predetermined interval vertically at the cylindrical section and which are opened and closed alternately at a fixed time interval, it is possible to treat the object to be treated continuously, and at the same time, it is possible to prevent the exhaust gas from flowing up through the charging device when the object to be treated is charged from above the treatment furnace.

### Brief Description of Drawings

[Fig. 1] Fig. 1 is a front view of a pyrolysis apparatus in an embodiment of the present invention.
[Fig. 2] Fig. 2 is a plan view of the pyrolysis apparatus in Fig. 1.
[Fig. 3] Fig. 3 is a plan view of a treatment furnace.
[Fig. 4] Fig. 4 is a vertical sectional view of a drying section.
[Fig. 5] Fig. 5 is a view seen from the direction of an arrow V in Fig. 4.
[Fig. 6] Fig. 6 is a view seen from the direction of an arrow VI in Fig. 4.
[Fig. 7] Fig. 7 is a vertical sectional view of a pyrolysis section.
[Fig. 8] Fig. 8 is a sectional view seen from the direction of the VII-VII line in Fig. 7.
[Fig. 9] Fig. 9 is a sectional view seen from the direction of the IX-IX line in Fig. 8.
[Fig. 10] Fig. 10 is a sectional view seen from the direction of the X-X line in Fig. 8.
[Fig. 11] Fig. 11 is a plan view of a primary purification tank.
[Fig. 12] Fig. 12 is a front view of the primary purification tank in Fig. 11.
[Fig. 13] Fig. 13 is a right side view of the primary purification tank in Fig. 11.
[Fig. 14] Fig. 14 is a plan view of a secondary purification tank.
[Fig. 15] Fig. 15 is a front view of the secondary purification tank in Fig. 14.
[Fig. 16] Fig. 16 is a right side view of the secondary purification tank in Fig. 14.
[Fig. 17] Fig. 17 is a plan view of a circulation purification tank.
[Fig. 18] Fig. 18 is a front view of the circulation purification tank in Fig. 17.
[Fig. 19] Fig. 19 is a right side view of the circulation purification tank in Fig. 17.
[Fig. 20] Fig. 20 is an enlarged front view of a part of a charging device.
[Fig. 21] Fig. 21 is a sectional view seen from the direction of the XXI-XXI line in Fig. 20.

### Reference Signs List

1 pyrolysis apparatus
2 treatment furnace
2A drying section
2B pyrolysis section
3 purification apparatus
4 automatic carrying device
5 automatic control panel
6 gas discharge pipe
7 purification water tank
8 primary purification tank
9 secondary purification tank
10 circulation purification tank
11 gas flue
12 return piping
13 electric blower
20 top cover
21 charging port
22 exhaust gas inlet
23 driving unit
24 geared motor
40 charging device
41 carrying conveyor
50 outer wall
51 inner wall
52 space part
53 plate
54 bar
55 agitation bar
56 rotation shaft
57A, 57B, 58A, 58B, 58C thermometer
60 grate
61 automatic ignition device
62A wall part
62B bottom part
63 expanded metal
64 heat exchange pipe
65 inspection door
65A window
66 inspection door
66A small window
67 ring-shaped portion
67A opening
68 linear portion
68A, 68B opening
69A inlet
69B, 69C, 69D air inlet with a cock
70 water
71 gas pool
72 suction port
80 inflow port
81 nozzle
82 pump
83 piping
83A suction port
84 electric blower
90 inflow port
91 piping
92 electric blower
93 nozzle
94 pump
95 suction port
100 inflow port
101 piping
102 nozzle
103 pump
104 suction port

### Description of Embodiments

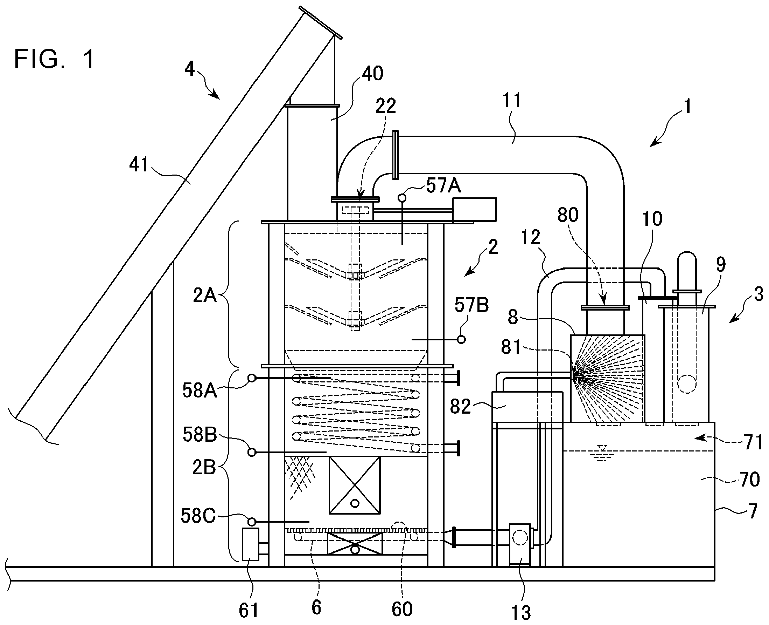

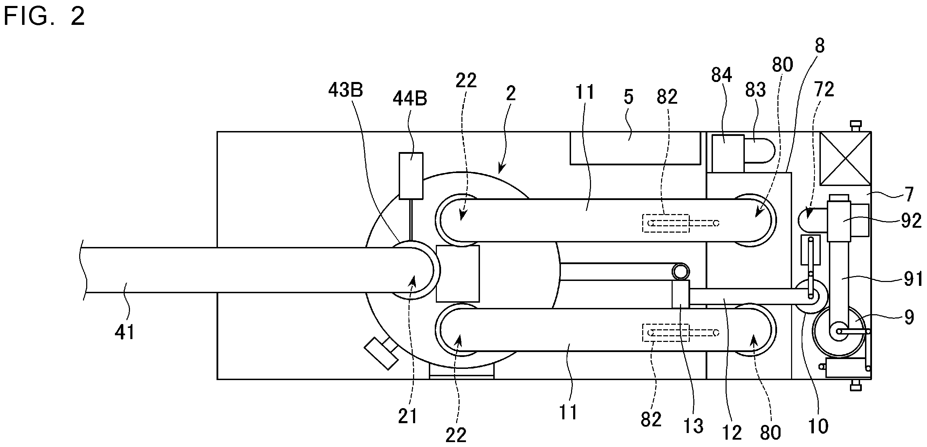

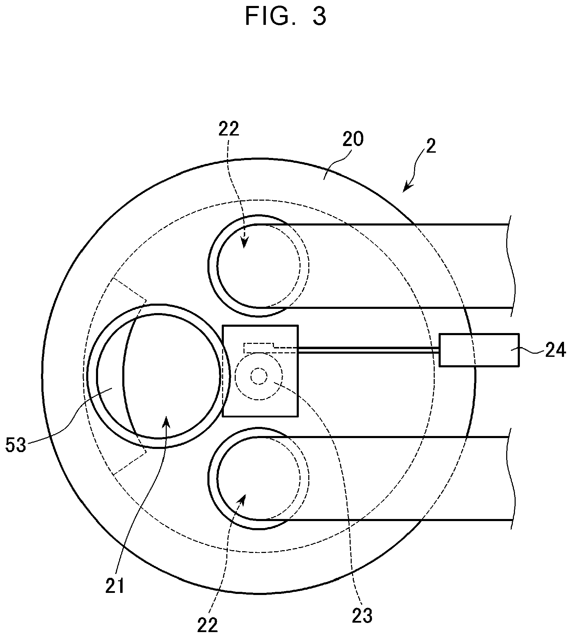

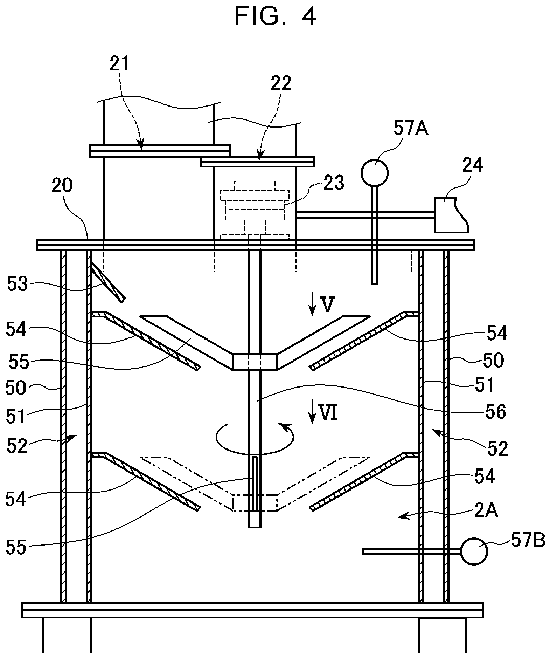

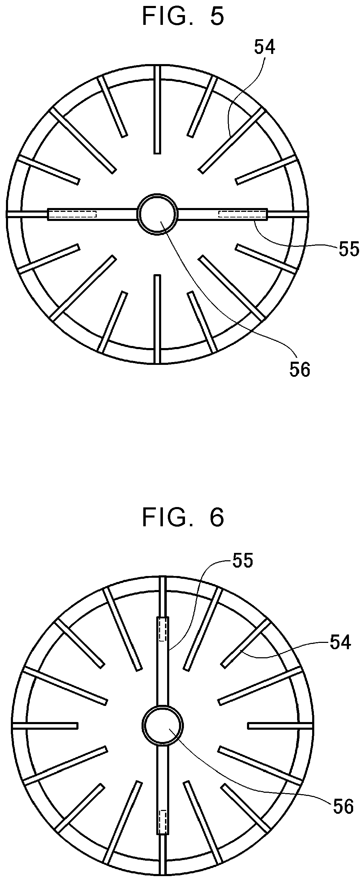

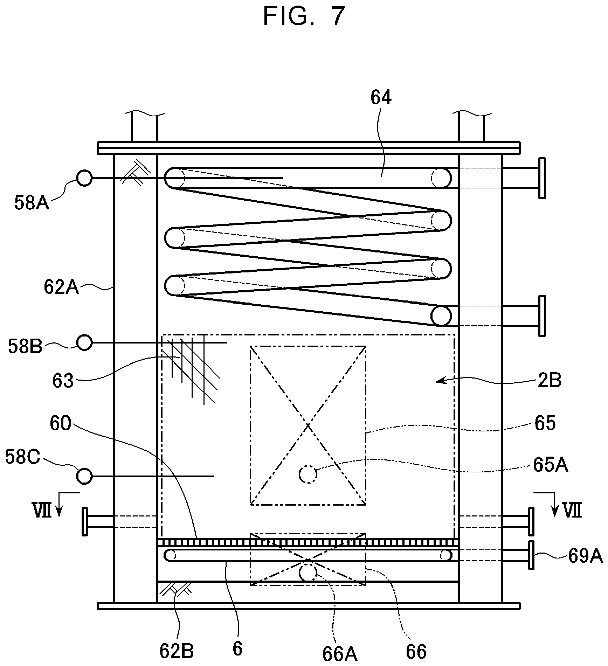

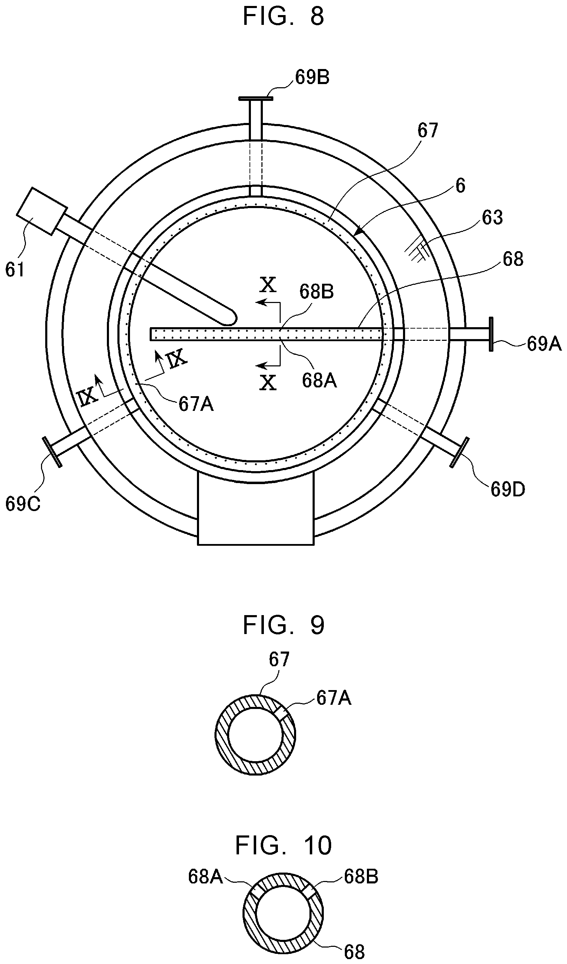

Fig. 1 is a front view of a pyrolysis apparatus in an embodiment of the present invention, Fig. 2 is a plan view thereof, Fig. 3 is a plan view of a treatment furnace, Fig. 4 is a vertical sectional view of a drying section, Fig. 5 is a view seen from the direction of an arrow V in Fig. 4, Fig. 6 is a view seen from the direction of an arrow VI in Fig. 4, Fig. 7 is a vertical sectional view of a pyrolysis section, Fig. 8 is a sectional view seen from the direction of the VII-VII line in Fig. 7, Fig. 9 is a sectional view seen from the direction of the IX-IX line in Fig. 8, and Fig. 10 is a sectional view seen from the direction of the X-X line in Fig. 8.

As shown in Figs. 1 and 2, a pyrolysis apparatus 1 in an embodiment of the present invention has: a treatment furnace 2 for treating an object to be treated such as organic waste including garbage, waste wood, waste plastics, and animal excrement; a purification apparatus 3 for purifying the exhaust gas generated in the treatment furnace; an automatic carrying device 4 for automatically carrying the object to be treated into the treatment furnace 2; and an automatic control panel 5. The treatment furnace 2 is in a cylindrical shape and has a drying section 2A in an upper part thereof, for drying the object to be treated that has been supplied by the automatic carrying device 4, and a pyrolysis section 2B in a lower part thereof, for pyrolyzing the object to be treated that has been dried in the drying section 2A.

As shown in Figs. 3 and 4, a top cover 20 of the treatment furnace 2 is provided with a charging port 21 through which the object to be treated is charged, and two exhaust gas inlets 22 through which the exhaust gas (smoke exhaust) generated inside the treatment furnace 2 is drawn. A charging device 40, which will be described later, is connected to the charging port 21, and the object to be treated is configured to be automatically charged into the treatment furnace 2.

The drying section 2A has an outer wall 50 and an inner wall 51. The space between the outer wall 50 and the inner wall 51 is configured to be a space part 52 where water supply and drainage is automatically performed. Provided inside the drying section 2A is a receiving plate 53 for receiving the object to be treated charged from the charging port 21 and guiding the received object to the central portion of the drying section 2A. In addition, upper and lower two-stage type receiving bars 54 and agitation bars 55 are provided inside the drying section 2A.

The receiving bars 54 are provided such that a plurality of bar bodies extend obliquely downward toward the central portion of the drying section 2A from the inner wall 51. The agitation bars 55 are provided extending obliquely upward above the receiving bars 54 from a rotation shaft 56 which is provided extending in the vertical direction at the central portion of the drying section 2A. The rotation shaft 56 is driven to rotate by a driving unit 23 which is provided on the top cover 20 of the treatment furnace 2, and the agitation bars 55 rotate together with the rotation shaft 56. As shown in Figs. 5 and 6, the upper and lower two-stage type receiving bars 54 are provided so as to be of alternating lengths by plan view and the agitation bars 55 are provided at the positions different by 90 degrees by plan view. Due to the above configuration, the object to be treated would not fall straight through the upper stage and the lower stage.

The driving unit 23 is driven by a geared motor 24 which is provided on the top cover 20. The rotation speed of the agitation bars 55 (rotation shaft 56) is controlled by the driving unit 23, the geared motor 24, and an inverter (not illustrated). Further, thermometers 57A, 57B are provided in the upper and lower parts of the drying section 2A, respectively. The thermometers 57A, 57B are connected to the automatic control panel 5.

As shown in Fig. 7, the pyrolysis section 2B has, in a lower part thereof, a grate 60 and an automatic ignition device 61 (see Fig. 8) for igniting automatically so that the pyrolysis of the object to be treated on the grate 60 continues. Fireproof cement is provided in the wall part 62A of the pyrolysis section 2B. Fireproof cement is also provided on the bottom part 62B. The inner side of the wall part 62A above the grate 60 is covered with expanded metal 63. In the upper part of the pyrolysis section 2B, a heat exchange pipe 64 is provided spirally. In the upper, middle, and lower parts of the pyrolysis section 2B, thermometers 58A, 58B, 58C are provided, respectively. The thermometers 58A, 58B, 58C are connected to the automatic control panel 5.

The object to be treated that has fallen from the drying section 2A is heated from below the grate 60 by the automatic ignition device 61 for a fixed period of time, and thereby pyrolysis begins. In addition, the object to be treated that has been dried in the drying section 2A falls substantially uniformly onto the grate 60 intermittently, and pyrolysis continues on the grate 60. The object to be treated that has been subjected to pyrolysis in a low oxygen state is carbonized and turned to magnetic ash, and the ash falls downward from the meshes of the grid of the grate 60.

Further, on the front surface of the pyrolysis section 2B, inspection doors 65, 66 are provided at the positions above and below the grate 60, respectively. The inspection door 65 is provided with an observation window 65A. From the observation window 65A, the status of the inside of the pyrolysis section 2B can be confirmed. Further, the inspection door 66 is provided with a small window 66A. From the inspection door 66, the magnetic ash below the grate 60 can be taken out. In addition, even while the pyrolysis apparatus 1 is in operation, it is possible to suck in and collect the magnetic ash via the small window 66A using an electric suction tool.

Next, the purification apparatus 3 will be explained. The purification apparatus 3 has a purification water tank 7 which retains water 70 and has a gas pool 71 formed in an upper part thereof, a primary purification tank 8 in which the exhaust gas drawn from the treatment furnace 2 is subjected to primary purification, a secondary purification tank 9 in which the gas purified by the primary purification tank 8 is subjected to secondary purification, and a circulation purification tank 10 in which the gas purified in the secondary purification tank 9 is subjected to circulation purification.

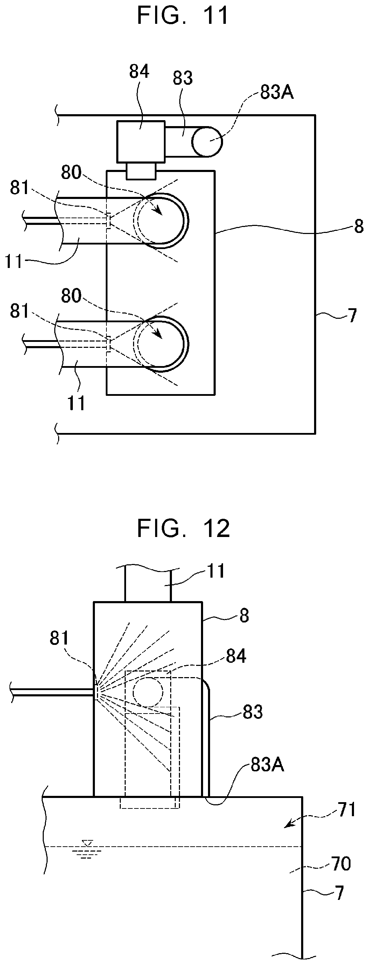

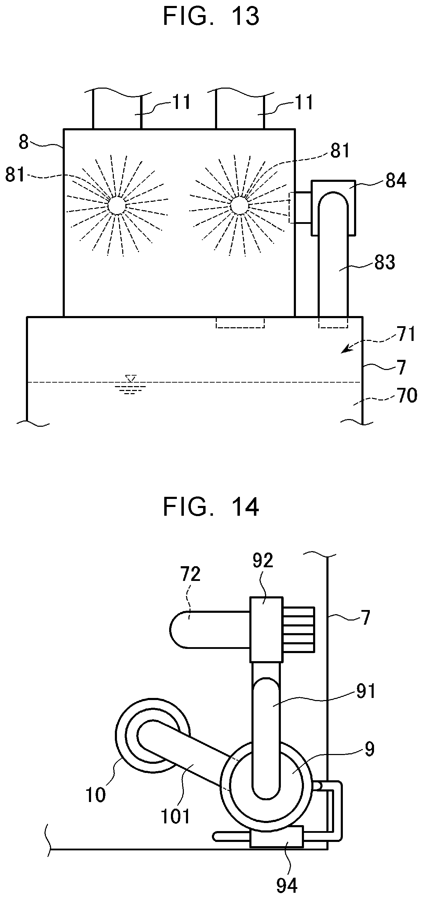

Fig. 11 is a plan view of the primary purification tank 8, Fig. 12 is a front view of Fig. 11, and Fig. 13 is a right side view of Fig. 11. As shown in Figs. 11 to 13, the primary purification tank 8 is box-shaped and arranged on top of the purification water tank 7.The lower surface of the primary purification tank 8 is open and connected to an upper part of the purification water tank 7. Two inflow ports 80 of the primary purification tank 8 and two exhaust gas inlets 22 of the treatment furnace 2 are respectively connected by gas flues 11.

Further, the primary purification tank 8 includes: nozzles 81 through which water is jetted toward the exhaust gas flowing in through the gas flues 11 from an upper part of the treatment furnace 2; pumps 82 (see Figs. 1 and 2) by which the water 70 is sucked up from the purification water tank 7 and supplied to the nozzles 81; a piping 83 through which the gas sucked up from the gas pool 71 of the purification water tank 7 is returned to the primary purification tank 8; and an electric blower 84 which is provided in the middle of the piping 83. The nozzle 81 is a full-conical nozzle for jetting the water 70 in a full-conical shape. The nozzles 81 are arranged in a horizontal direction inside the primary purification tank 8.

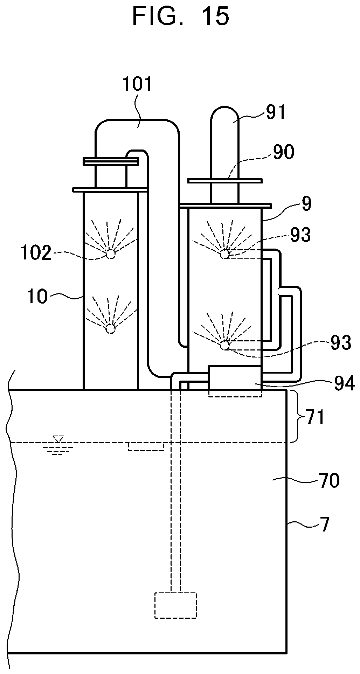

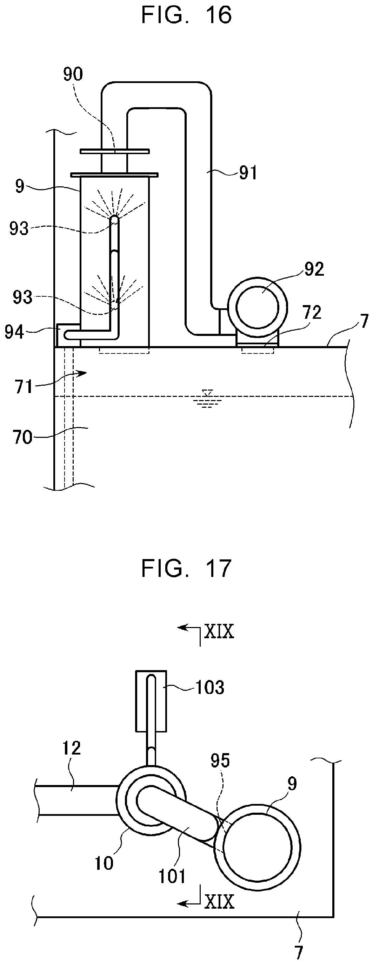

Fig. 14 is a plan view of the secondary purification tank 9, Fig. 15 is a front view of Fig. 14, and Fig. 16 is a right side view of Fig. 14. As shown in Figs. 14 to 16, the secondary purification tank 9 has a cylindrical shape and is arranged on top of the purification water tank 7.The lower surface of the secondary purification tank 9 is open and connected to the upper part of the purification water tank 7. An inflow port 90 of the secondary purification tank 9 and a suction port 72 provided on the upper wall of the purification water tank 7 are connected by a piping 91. An electric blower 92 is provided in the middle of the piping 91.

Further, the secondary purification tank 9 is equipped with nozzles 93 through which water is jetted toward the gas sucked up from the gas pool 71 of the purification water tank 7 by the electric blower 92 through the piping 91, and a pump 94 by which the water 70 is sucked up from the purification water tank 7 and supplied to the nozzles 93. The nozzle 93 is a full-conical nozzle for jetting the water 70 in a full-conical shape. The nozzles 93 are provided upwardly on the upper and lower two stages inside the secondary purification tank 9.

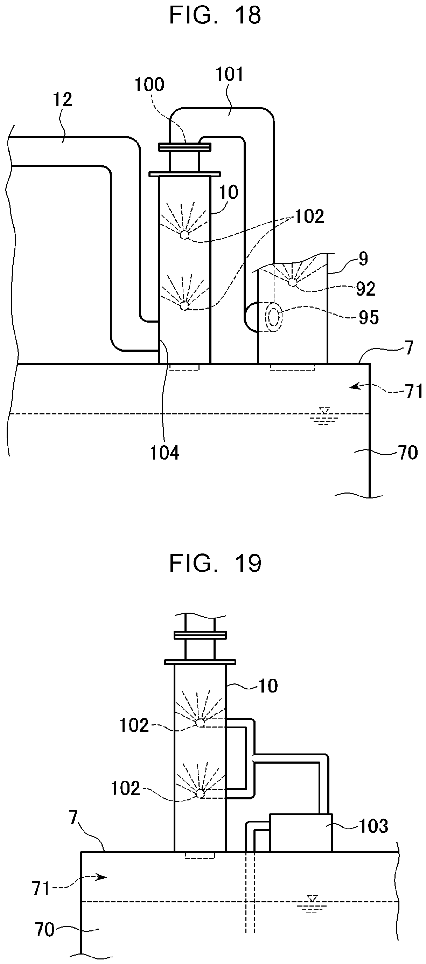

Fig. 17 is a plan view of the circulation purification tank 10, Fig. 18 is a front view of Fig. 17, and Fig. 19 is a right side view of Fig. 17. As shown in Figs. 17 to 19, the circulation purification tank 10 has a cylindrical shape and is arranged on top of the purification water tank 7.The lower surface of the circulation purification tank 10 is open and connected to the upper part of the purification water tank 7. The circulation purification tank 10 is provided between the secondary purification tank 9 and a return piping 12. The return piping 12 is a piping through which the gas that has passed through the secondary purification tank 9 and the circulation purification tank 10 is fed into the treatment furnace 2. The return piping 12 is connected to a suction port 104. An electric blower 13 for feeding the gas into the treatment furnace 2 is provided in the middle of the return piping 12.

An inflow port 100 of the circulation purification tank 10 and a suction port 95 of the secondary purification tank 9 are connected by a piping 101. The suction port 95 of the secondary purification tank 9 is formed in the lower part of the secondary purification tank 9 that is below the nozzles 93 so as to suck in the gas that has passed through the secondary purification tank 9. The circulation purification tank 10 includes nozzles 102 through which water is jetted toward the gas sucked up from the secondary purification tank 9 via the piping 101 by the suction force of the electric blower 13 which is provided in the middle of the return piping 12, and a pump 103 by which the water 70 is sucked up from the purification water tank 7 and supplied to the nozzles 102. The nozzle 102 is a full-conical nozzle for jetting the water 70 in a full-conical shape. The nozzles 102 are provided upwardly on the upper and lower two stages inside the circulation purification tank 10.

The suction port 104 of the return piping 12 is formed in the lower part of the circulation purification tank 10 that is below the nozzles 102 so as to suck in the gas that has passed through the circulation purification tank 10. The return piping 12 is connected to a gas discharge pipe 6 which is provided in a space below the grate 60 inside the treatment furnace 2. The gas discharge pipe 6 discharges the gas, which is fed through the return piping 12, substantially uniformly into the space below the grate 60 inside the treatment furnace 2. As shown in Fig. 8, the gas discharge pipe 6 has: a ring-shaped portion 67 of which a steel pipe is arranged in a ring shape having its center at the central portion of the treatment furnace 2 by plan view; a linear portion 68 of which a steel pipe is arranged linearly toward the central portion of the treatment furnace 2 by plan view; and an inlet 69A connected to the return piping 12.

As shown in Fig. 9, the ring-shaped portion 67 includes a plurality of openings 67A formed obliquely upward toward the central portion of the treatment furnace 2, the openings 67A being arranged at a predetermined interval in the circumferential direction of the ring shape. As shown in Fig. 10, the linear portion 68 includes a plurality of openings 68A, 68B respectively formed obliquely upward on both right and left sides of the linear portion 68 toward the extension direction thereof, the openings 68A, 68B being arranged at a predetermined interval in the extension direction of the linear portion 68. Further, air inlets 69B, 69C, 69D each with a cock for drawing air in from three directions around the treatment furnace 2 are connected to the ring-shaped portion 67. The air inlets 69B, 69C, 69D each with a cock are opened only when the magnetic ash is taken out, and always remain in a closed state when the pyrolysis apparatus 1 is in operation.

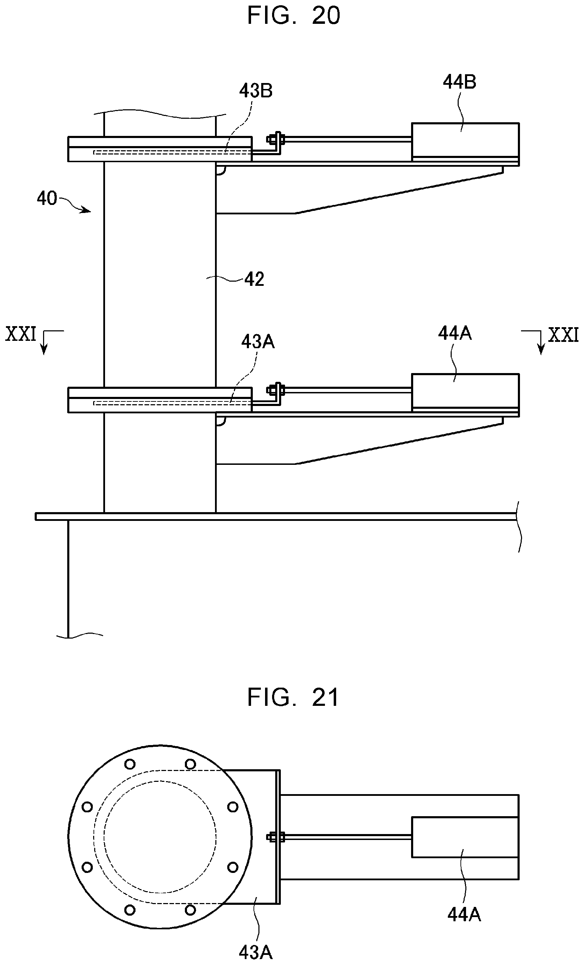

Next, the automatic carrying device 4 will be explained. The automatic carrying device 4 has the charging device 40 for automatically charging the object to be treated from above the treatment furnace 2, and a carrying conveyor 41 which carries the object to be treated to the charging device 40. Fig. 20 is an enlarged front view of a portion of the charging device 40, and Fig. 21 is a sectional view seen from the direction of the XXI-XXI line in Fig. 20.

As shown in Figs. 20 and 21, the charging device 40 has a cylindrical section 42 which is connected to the upper part of the treatment furnace 2 and through which the object to be treated supplied from above is charged into the treatment furnace 2, and a pair of dumpers 43A, 43B for opening and closing the cylindrical section 42 which are provided at a predetermined interval vertically at the cylindrical section 42. The dumpers 43A, 43B are moved forward and backward inside the cylindrical section 42 by air cylinders 44A, 44B, respectively. The pair of upper and lower dumpers 43A, 43B alternately open and close the cylindrical section 42 at a fixed time interval.

The carrying conveyor 41 may be, for example, a screw conveyor, a bucket conveyor, or a belt conveyor according to the type of the object to be treated. The carrying conveyor 41 is provided horizontally or in inclination according to the type of the object to be treated. For example, in the case of a soft object such as plastics, it is possible to carry it at an inclination angle of 55 degrees max. by a screw conveyor. The carrying amount of the carrying conveyor 41 may be freely controlled by a geared motor, an inverter, or the like.

Next, operations of the pyrolysis apparatus 1 of the above-mentioned configuration will be explained. The object to be treated such as organic waste including garbage, waste wood, waste plastics, and animal excrement is supplied to the carrying conveyor 41 in a state of being crushed in advance into a size of 100 mm or less. The object to be treated supplied from above the charging device 40 by the carrying conveyor 41 is charged in fixed quantities into the treatment furnace 2, by opening and closing the pair of upper and lower dumpers 43A, 43B alternately at a fixed time interval.

The object to be treated that has been charged into the treatment furnace 2 is dried in the drying section 2A by the heat rising from the pyrolysis section 2B. At this time, the object to be treated is dried while being agitated by the agitation bars 55, rotating above the upper and lower two-stage type receiving bars 54. Further, the temperatures measured by the thermometers 57A, 57B provided respectively in the upper and lower parts of the drying section 2A are displayed on the automatic control panel 5, so that temperature control is performed based on the displayed temperatures. Further, according to the pyrolysis apparatus 1 in the present embodiment, it is possible to obtain hot air from remaining heat by the automatic intake and exhaust of the air in the space part 52 between the outer wall 50 and the inner wall 51 of the drying section 2A. It is also possible to obtain hot water from remaining heat by the automatic supply and drainage of the water in the space part 52.

The object to be treated that has been dried in the drying section 2A falls substantially uniformly onto the grate 60 inside the pyrolysis section 2B intermittently. The object to be treated that has fallen is heated from below the grate 60 for a fixed period of time via the automatic ignition device 61, so as to be pyrolyzed. The pyrolysis apparatus 1 is operated in a state in which the air inlets 69B, 69C, 69D each with a cock are always closed, and a low oxygen state is maintained inside the pyrolysis section 2B, so that pyrolysis of the object to be treated inside the pyrolysis section 2B progresses without shifting to oxidation (combustion). In other words, most of the gas is turned to nitrogen in the state of a low oxygen concentration, and thereby the low oxygen state suppresses combustion in the pyrolysis section 2B, and pyrolysis (a smothered state) progresses. The temperatures measured by the thermometers 58A, 58B, 58C provided respectively in the upper, middle, and lower parts of the pyrolysis section 2B are displayed on the automatic control panel 5, so that temperature control is performed based on the displayed temperatures.

At this time, the oxygen molecules in the low oxygen state do not combine with carbon molecules through combustion (oxidation) but collide, in a translational state, with the molecular structure of the object to be treated (organic matter) of which combustion has begun via ignition. Consequently, the potential energy at the time of the collision is converted into heat energy, and the thermal decomposition of ions (molecular dynamics accompanying a chemical reaction) begins at a temperature close to the critical temperature (a low-temperature plasma state) specific to each organic matter. On the other hand, the oxygen molecules not involved in the thermal decomposition of ions are attracted one another by the van der Waals force of the oxygen molecules and the potential energy held by the walls of the organic matter, in the process during which the matter is gradually formed into ceramics (ash) such as carbon (C) and nitrogen (N) by the thermal decomposition of ions. Due to this attraction, or in an electromagnetic field generated in the plasma state, the oxygen molecules are confined inside in a state of alignment into a lattice shape (ladder-like). From this confinement, magnetic ceramics having ferromagnetism are produced.

In this pyrolysis apparatus 1, the heat generated in the pyrolysis section 2B goes up to the drying section 2A and is used for drying the object to be treated in the drying section 2A, so that it is not required to dry the object in advance and hence efficient pyrolytic treatment is possible. Further, according to the pyrolysis apparatus 1 in the present embodiment, it is also possible to obtain hot water from remaining heat by the automatic supply and drainage of the water in the heat exchange pipe 64. If there is no need to dry the object to be treated, it is possible to configure the apparatus without the drying section 2A.

The exhaust gas inside the treatment furnace 2 is sent from the exhaust gas inlets 22 above the treatment furnace 2 to the purification apparatus 3 through the gas flues 11. At this time, the exhaust gas generated in the treatment furnace 2 is prevented from flowing up into the charging device 40 by alternately opening and closing the pair of upper and lower dumpers 43A, 43B of the charging device 40.

In the primary purification tank 8, as shown in Figs. 11 to 13, the water 70 in the purification water tank 7 is sucked up by the pumps 82 and is jetted in a full-conical shape at a pressure of 0.2 to 0.3 Mpa from the nozzles 81. Due to this configuration, the exhaust gas is rapidly cooled and decomposed to be purified, and the water 70 brought into contact with the exhaust gas falls into the purification water tank 7. Further, the gas in the gas pool 71 of the purification water tank 7 is sucked up by the electric blower 84 from a suction port 83A and is sent to the primary purification tank 8 through the piping 83. Due to this configuration, the water 70 is jetted from the nozzles 81 in the primary purification tank 8 repeatedly toward the exhaust gas, and the pressure increase in the gas pool 71 is suppressed and the exhaust gas concentration therein is lowered.

Further, as shown in Figs. 14 to 16, the gas in the gas pool 71 of the purification water tank 7 is sucked up by the electric blower 92 from the suction port 72 and is sent to the secondary purification tank 9 through the piping 91. In the secondary purification tank 9, the water 70 in the purification water tank 7 is sucked up by the pump 94 and is jetted in a full-conical shape at a pressure of 0.2 to 0.3 Mpa from the nozzles 93 in the upper and lower two stages. Due to this configuration, the gas sent to the secondary purification tank 9 is decomposed and made smokeless and odorless, and then sent to the circulation purification tank 10 from the suction port 95. Further, the water 70 jetted from the nozzles 93 falls into the purification water tank 7 from the lower part of the secondary purification tank 9.

As shown in Figs. 17 to 19, the gas that has passed through the secondary purification tank 9 is sucked up from the suction port 95 into the piping 101 by the electric blower 13 (see Fig. 1) which is provided in the middle of the return piping 12, and sent to the circulation purification tank 10. In the circulation purification tank 10, the water 70 in the purification water tank 7 is sucked up by the pump 103 and is jetted in a full-conical shape at a pressure of 0.2 to 0.3 Mpa from the nozzles 102 in the upper and lower two stages. Due to this configuration, the gas sent to the circulation purification tank 10 is decomposed and made smokeless and odorless, and then sent to the return piping 12 from the suction port 104. Further, the water 70 jetted from the nozzles 102 falls into the purification water tank 7 from the lower part of the circulation purification tank 10. It may be configured such that the circulation purification tank 10 is omitted and gas is sent from the secondary purification tank 9 directly to the return piping 12.

The gas sent to the return piping 12 enters the gas discharge pipe 6 from the inlet 69A and is substantially uniformly discharged obliquely upward from the openings 68A, 68B of the linear portion 68 and the openings 67A of the ring-shaped portion 67 into the space below the grate 60. The purified gas supplied from the inlet 69A is a low oxygen concentration gas that was made smokeless and odorless and the low oxygen state is maintained inside the treatment furnace 2, so that pyrolysis of the object to be treated in the pyrolysis section 2B progresses. The operations as above are all automatically controlled by the automatic control panel 5.

As discussed above, according to the pyrolysis apparatus 1 in the present embodiment, the exhaust gas generated in the treatment furnace 2 flows from the upper part of the treatment furnace 2 through the gas flue 11 into the primary purification tank 8, the purification water tank 7, the secondary purification tank 9, and the circulation purification tank 10 for purification, and the purified gas is all returned into the treatment furnace 2 through the return piping 12, so that no exhaust gas is released into the atmosphere and there is no environmental pollution. Further, the purified gas that passes through the openings 67A, 68A, 68B of the gas discharge pipe 6 and the inlet 69A was made to be smokeless and odorless, so that soot generation and adhesion is prevented and no maintenance is required.

Further, the carbon in the exhaust gas falls into the purification water tank 7 together with the water 70 and is solidified and becomes tar therein, so that it is possible to collect and use the tar in the purification water tank 7. The water 70 in the purification water tank 7 is configured to be purified using a coagulant in a reserve tank (not illustrated) provided separately and then circulated, therefore no exchange required.

Further, according to the pyrolysis apparatus 1 in the present embodiment, the purified gas with low oxygen concentration that was made smokeless and odorless is discharged through the gas discharge pipe 6 substantially uniformly into the space below the grate 60 in the treatment furnace 2, so that the oxygen amount in the pyrolysis section 2B of the treatment furnace 2 becomes uniform and the object to be treated is uniformly and efficiently pyrolyzed in the pyrolysis section 2B. Consequently, the object to be treated in the pyrolysis section 2B can be subjected to pyrolytic treatment evenly and efficiently.

### Industrial Applicability

The pyrolysis apparatus of the present invention is useful as an apparatus for pyrolyzing an object such as organic waste including garbage, waste wood, waste plastics, and animal excrement and is suitable, in particular, as a pyrolysis apparatus capable of pyrolyzing the object to be treated without releasing any exhaust gas into the atmosphere.

## Claims

1. A pyrolysis apparatus, comprising:
a treatment furnace having a pyrolysis section in which an object to be treated is subjected to pyrolysis on a grate;
a purification water tank retaining water and having a gas pool formed in an upper part thereof;
a primary purification tank connected to the upper part of the purification water tank, in which water is jetted toward exhaust gas flowing in from an upper part of the treatment furnace through a gas flue;
a piping through which gas is sucked up from the gas pool of the purification water tank and returned to the primary purification tank;
a secondary purification tank connected to the upper part of the purification water tank, in which water is jetted toward the gas sucked up from the gas pool of the purification water tank; and
a return piping through which the gas that has passed through the secondary purification tank is fed into the treatment furnace.

2. The pyrolysis apparatus according to Claim 1, wherein the gas discharged from the upper part of the treatment furnace is all returned into the treatment furnace through the gas flue, the primary purification tank, the secondary purification tank, and the return piping.

3. The pyrolysis apparatus according to Claim 1 or 2, comprising a gas discharge pipe which is connected to the return piping, through which the gas fed from the return piping is discharged substantially uniformly into a space below the grate inside the treatment furnace.

4. The pyrolysis apparatus according to any one of Claims 1 to 3, comprising a circulation purification tank which is provided between the secondary purification tank and the return piping and is connected to the upper part of the purification water tank, wherein water is jetted toward the gas that has passed through the secondary purification tank in the circulation purification tank.

5. The pyrolysis apparatus according to any one of Claims 1 to 4, wherein the treatment furnace has a drying section above the pyrolysis section, so that the object to be treated is dried by a heat rising from the pyrolysis section.

6. The pyrolysis apparatus according to any one of Claims 1 to 5, comprising a charging device by which the object to be treated is automatically charged from above the treatment furnace, wherein the charging device comprises:
a cylindrical section which is connected to the upper part of the treatment furnace and through which the object to be treated supplied from above is charged into the treatment furnace; and
a pair of upper and lower dumpers for opening and closing the cylindrical section, which are provided at a predetermined interval vertically at the cylindrical section, the dumpers being opened and closed alternately at a fixed time interval.
